# EUROPÄISCHE PATENTSCHRIFT

(11) **EP 2 248 435 B1**
(45) Veröffentlichungstag und Bekanntmachung des Hinweises auf die Patenterteilung: **19.08.2015**
(21) Anmeldenummer: 10161895.7
(22) Anmeldetag: 04.05.2010
(51) Int. Cl.: A44B 11/12, B60P 7/08

(54) **Gurtspanner**
Belt tensioner
Tendeur de sangle

(30) Priorität: 07.05.2009 DE 102009020239
(43) Veröffentlichungstag der Anmeldung: 10.11.2010
(73) Patentinhaber: Rodriguez GmbH, 52249 Eschweiler (DE)
(72) Erfinder: Hack, Franz, 52353 Düren (DE)
(74) Vertreter: Naeven, Ralf

(56) Entgegenhaltungen:
- WO-A1-84/00712
- FR-A1- 2 909 268
- GB-A- 1 591 101
- GB-A- 2 262 304
- GB-A- 2 284 854

## Beschreibung

Die Erfindung betrifft einen Gurtspanner mit den Merkmalen des Oberbegriffs des Anspruchs 1.

Aus der GB 2 284 854 A ist ein Gurtspanner der eingangs genannten Art bekannt. Ein Schnappelement aus einem Federstahl wird dabei mehrfach gebogen mit zumindest zwei Armen jeweils quer über einen Spannhebel geführt und dabei an mindestens zwei Seitenwangen des Spannhebels fixiert. Das Schnappelement ragt an beiden Seiten des Gurtspanners hervor und ist somit raumgreifend. Nachteilig sind zudem seine aufwendige Fixierung des Federstahls sowie ein relativ hoher Materialverbrauch, der kostenungünstig und gewichtstreibend ist.

Aus der US 2003/0177614 A1 ist ein Gurtspanner bekannt, bei dem das Schnappelement am Spannhebel angeordnet und durch eine gesonderte Feder in Richtung auf das vordere Ende des Spannhebels vorgespannt ist. Das Schnappelement ist T-förmig, wobei die seitlichen Ausläufer jeweils durch Langlöcher von Seitenwangen des Spannhebels geführt sind und eine Schraubenfeder mit ihrem einen Ende ein Basisstück des Schnappelement sowie mit dem anderen Ende einen Stift des Spannhebels umfasst. Um ein Ausgleiten aus einem der Langlöcher zu verhindern, sind am Schnappelement ein Positionier-Nippel und ein Pin vorgesehen, die jeweils gegen eine der Innenseiten der Spannhebel-Seitenwangen wirken. Um den Spannhebel in diese Position einbauen zu können, wird der lösbare Pin erst bei montiertem-Schnappelement eingesetzt.

Die Handhabung beim Zusammensetzen des Schnappelements ist aufwändig. Zudem besteht die Gefahr, dass der die Position des Schnappelements sichernde Pin verloren geht oder abbricht und damit ein Gefahrenpunkt für die Handhabung gegeben ist.

Bei einem aus DE 20 2007 010 263 bekannten Gurtspanner wird der Gurt um den Gelenkbolzen des Spannhebels sowie um eine Umlenkkante am Spannhebel selbst geführt. Mittels eines am Spannhebel angeordneten Federstiftes wird der Gurt in der Spann-Endstellung des Spannhebels gegen eine im Boden des Grundelements vorgesehene Sicke gedrückt, wodurch eine Klemmwirkung gegeben ist. Um den Spannhebel in der Spann-Endstellung zu fixieren, ist an den Seitenwangen des Grundelements ein Bügel schwenkbar fixiert, dessen freies Ende in eine am Spannhebel angeordnete Einrastnut eingreift. Zum Auslösen des Spannhebels wird der Bügel gegen eine Federkraft manuell verschwenkt, wodurch der Spannhebel freigegeben wird. Es handelt sich bei der bekannten Anordnung um einen Kippsicherheitsspanner. Kippsicherheitsspanner widerstehen höheren Belastungen und sind sicherer als die sonst handelsüblichen "Overcenter"- oder auch "Undercenter" Spanner. Kippsicherheitsspanner sind jedoch teurer und in der Regel unhandlicher in der Bedienung. So ist insbesondere auch bei dem Kippsicherheitsspanner des genannten Standes der Technik die Anordnung des Bügels mit Schwenkachse und gesondertem um die Schwenkachse herum angeordneten Federelement aufwändig in der Fertigung sowie materialintensiv, was nachteilig für das Gewicht und die Fertigungskosten des Gurtspanners ist.

Ein "Undercenter"-Spanner ist z.B. aus der US 3.887.966 bekannt. Dort ist es offenbart, den zu spannenden Gurt allein in einem unteren Bereich des Spannhebels zu verlegen, wobei in der Spann-Endstellung des Spanners dieser Bereich dann unterhalb der Schwenkachse des Spannhebels liegt. Dies hat zur Folge, dass bei Belastung des eingespannten Gurtes der Spannhebel stabil in der Spann-Endstellung gehalten wird. Bei dem oben beschriebenen Kippsicherheitsschalter gemäß der DE 20 2007 010 263 U1 hingegen ist der Gurt um die Schwenkachse des Spannhebels geführt, was dazu führt, dass der eingespannte Gurt bei Belastung eine den Spannhebel öffnende Kraft ausübt. Der Spannhebel wird dabei allein von der Verriegelung in der Spann-Endstellung gehalten.

Aus der FR 2 909 268 A1 ist ein Gurtspanner bekannt, bei dem sowohl am Grundelement als auch am Spannhebel jeweils eine Umlenkkante zum Umlenken des Gurtes in der Spann-Endstellung vorgesehen ist. Dabei ist die am Spannhebel vorgesehene Umlenkkante an einem zwischen zwei Aussparungen fixierten Zwischensteg durch eine Biegekante realisiert. Des Weiteren ist die am Grundelement angeordnete Umlenkkante durch einen Abschnitt einer Aufkantung der Aussparung sowie eine sich an einem Abschnitt der Aufkantung anschließende Abkantung gebildet.

Aus der WO 84/00712 A1 ist ein Gurtspanner bekannt, bei dem am Spannhebel ein Zwischensteg vorgesehen ist, der eine Biegekante sowie eine Sicke aufweist.

Aus der GB 1 591 101 ist ein Spannelement bekannt, bei dem die Aussparungen im Grundelement zu den Seitenwangen des Grundelements hin durch einstückig mit diesen Seitenwangen verbundene und zu diesen Seitenwangen abgewinkelte Winkelstücke begrenzt sind.

Es ist nun Aufgabe der vorliegenden Erfindung, einen Gurtspanner der vorgenannten Art zur Verfügung zu stellen, bei dem die Mittel zum Fixieren des Spannhebels in der Spann-Endstellung sowie zum Auslösen bei gleicher Effektivität gegenüber dem Stand der Technik einen einfacheren und Material sparenden Aufbau aufweisen.

Diese Aufgabe wird bei einem Gurtspanner der vorgenannten Art durch die kennzeichnenden Merkmale des Anspruchs 1 gelöst.

Weiterführende Ausgestaltungen der Erfindung sind durch die Unteransprüche gegeben.

Die Anordnung der Einrastnut in der Seitenwange des Grundelements bietet eine wirkungsvolle und mit geringem Aufwand herstellbare Einrastmöglichkeit. Das Schnappelement ist als eine Federstange ausgebildet, die an einer Seitenwange des Spannhebels fixiert sowie durch eine in der gegenüberliegenden Seitenwange des Spannhebels vorgesehene Öffnung hindurchgeführt ist und auf diese Weise seitlich aus dem Spannhebel herausragt. Die Eigenelastizität der Federstange bewirkt die Auslenkbarkeit, die das Schnappelement beim Einrasten und beim Auslösen des Spannhebels benötigt. Bevorzugt ist die Öffnung der zweiten Seitenwange durch ein Langloch gebildet, welches die Bewegung des einrastenden Endes der Federstange im Wesentlichen radial zur Schwenkbewegung des Spannhebels erlaubt, eine Bewegungskomponente in Umfangsrichtung der Schwenkbewegung jedoch unterbindet.

Das Schnappelement kann so ausgebildet sein, dass es seitlich aus der Seitenwange des Grundelements herausragt und z. B. per Hand in eine Auslösestellung gebracht werden kann.

Es ist allerdings auch möglich, mit einem taschenfömig ausgebildeten Endbereich des zu spannenden Gurtes das Schnappelement derart zu umgreifen, dass durch einfachen manuellen Zug an einer Gurtschlaufe das Schnappelement in die Auslösestellung gezogen werden kann.

Zur Sicherung des Gurtes in der Spann-Endstellung des Spannhebels kann im Grundelement des Weiteren ein Spannsteg vorgesehen sein, der den zwischen zwei Umlenkkanten geführten Gurt quer zur Längsrichtung des Gurtes auslenkt und ein Lockern des Gurtes verhindert.

Insbesondere kann der erfindungsgemäße Gurtspanner als Undercenter-Spanner ausgebildet sein, der die einfache Bedienbarkeit der bisher handelsüblichen Overcenter- oder Undercenter-Spanner mit der Sicherheit und Belastbarkeit der Kippsicherheitsspanner weitgehend kombiniert. Die leichte Bedienbarkeit und gleichzeitig hohe Sicherheit wird durch die bereits beschriebene Verriegelungsmöglichkeit mittels des Schnappelements und der Anordnung jeweils einer Umlenkkante im Bodenstück des Grundelements und im Spannhebel ermöglicht. Durch die Anordnung der Umlenkkanten verläuft der eingespannte Gurt unterhalb der Schwenkachse des Spannhebels und trägt somit bei Belastung des Gurtes zur stabilen Lage des Spannhebels in der Spann-Endstellung bei.

Eine hohe Belastbarkeit des Spanngurtes wird durch kumulativ oder alternativ eingesetzte diverse Verstärkungsmaßnahmen erreicht, insbesondere durch die Sicke im Zwischensteg des Spannhebels und den Biegekanten an beiden Seiten dieses Zwischenstegs, Sicken im Bodenstück des Grundelements, der Aufkantung in einer Aussparung in diesem Bodenstück und durch die Winkelform des Spannhebels.

Eine vorteilhafte Ausführungsform des erfindungsgemäßen Gurtspanners ist im Folgenden anhand von Figuren dargestellt.

Es zeigt
- Fig. 1:: Einen Gurtspanner in vollständig geöffneter Stellung in räumlicher Ansicht,
- Fig. 2:: einen vergrößerten Ausschnitt aus Fig. 1,
- Fig. 3:: eine Draufsicht auf den Gurtspanner gemäß Fig. 1,
- Fig. 4:: einen seitlichen Schnitt zum Gurtspanner gemäß Fig. 3,
- Fig. 5:: den Gurtspanner in halbgeschlossenem Zustand in räumlicher Ansicht,
- Fig. 6:: den Gurtspanner gemäß Fig. 5 in Seitenansicht,
- Fig. 7:: den Gurtspanner in geschlossenem Zustand in Seitenansicht,
- Fig. 8:: den Gurtspanner gemäß Fig. 7 in Draufsicht,
- Fig. 9:: den Gurtspanner gemäß Fig. 8 im seitlichen Schnitt,
- Fig. 10:: den Gurtspanner gemäß Fig. 9 mit eingelegtem Gurt und
- Fig. 11:: der Gurtspanner in geschlossenem Zustand in räumlicher Ansicht.

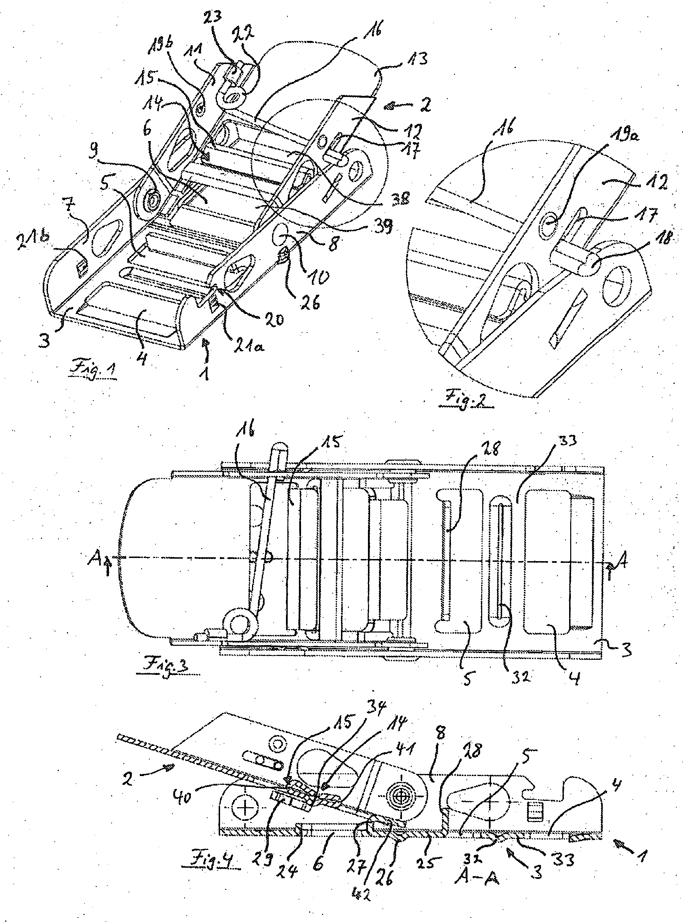

Fig. 1 zeigt einen Gurtspanner ohne Gurt in geöffnetem Zustand. Der Gurtspanner weist ein Grundelement 1 und einen schwenkbar am Grundelement 1 angelenkten Spannhebel 2 auf. In einem Bodenstück 3 des Grundelements 1 sind drei Aussparungen 4, 5, und 6 vorgesehen, durch die der zu spannende und hier nicht dargestellte Gurt geführt werden kann. Seitlich ist das Grundelement 1 durch zwei Seitenwangen 7 und 8 begrenzt, an denen der Spannhebel 2 über zwei Schwenkverbindungen 9 und 10 angelenkt ist. Der Spannhebel 2 umfasst ebenfalls zwei Seitenwangen 11 und 12, an denen zum einen eine Bedienplatte 13 sowie ein Zwischensteg 14 fixiert sind. Der Zwischensteg 14 begrenzt zwei Aussparungen 38 und 39 und weist eine Umlenkkante 15 auf, um die der hier nicht dargestellte, zu spannende Gurt gelegt wird, wie weiter unten erläutert ist.

An der Seitenwange 11 des Spannhebels 2 ist ein Federstift 16 fixiert, der z. B. aus Stahl gefertigt sein kann. Der Federstift 16 überquert den Spannhebel 2 und ragt durch ein Langloch 17 in der Seitenwange 12 des Spannhebels 2 heraus. Diese Situation ist im vergrößerten Ausschnitt B in Fig. 2 dargestellt. Das aus dem Langloch 17 herausragende Ende 18 des Federstifts ist gebogen und damit verstärkt und gleichzeitig ohne scharfe Kante ausgebildet. Neben dem Langloch 17 ist ein Einrastkopf 19a vorgesehen. Beim Schließen des Spannhebels 2 wirkt der Federstift 16 mit einer in der Seitenwange 8 des Grundelements 1 eingearbeiteten Einrastnut 20 zusammen, wie später deutlicher dargestellt wird. Gleichzeitig rasten der Einrastkopf 19a an der Seitenwange 12 des Spannhebels 2 sowie der weitere Einrastkopf 19b an der anderen Seitenwange 11 des Spannhebels 2 in die zugehörigen Einraststücke 21 a bzw. 21 b in den Seitenwangen 7 und 8 des Grundelements 1 ein.

Der Federstift 16 weist eine Federschleife 22 auf und ist im eingebauten Zustand elastisch vorgespannt. Aufgrund dessen braucht der Federstift 16 zur Fixierung an der Seitenwange 11 lediglich in eine Aufnahme 23 eingesteckt zu werden. Eine Schweißverbindung oder dergleichen ist nicht zwingend erforderlich.

Fig. 3 zeigt den Gurtspanner gemäß den Figuren 1 und 2 in Draufsicht. Im seitlichen Querschnitt A - A gemäß Fig. 4 werden die einzelnen Bereiche des Bodenstücks 3 des Grundelements 1 deutlich. Ein mittleres Bodenstückteil 25 umfasst eine verstärkende Sicke 26, welche zur weiteren Erhöhung der Verstärkungswirkung um die Biegekante herum in die Seitenwangen 7 und 8 hineingeführt ist (siehe Fig. 1). Die Aussparung 6 im Bodenstück 3, die zum Beispiel im Tiefziehverfahren hergestellt werden kann, ist mit einer umlaufenden Verstärkungskante 24 versehen. Auf einen Teil der Verstärkungskante 24 ist mittels einer Abkantung 42 eine rohrähnlich gestaltete Umlenkkante 27 für den zu spannenden Gurt angeordnet. Des Weiteren weist das mittlere Bodenstückteil 25 eine Abkantung 28 auf, die das Bodenstückteil 25 verstärkt. Die Abkantung 28 kann in hier nicht dargestellter Weise auch länger ausgeführt werden, so dass sie als Spannsteg wirken kann, der im geschlossenen Zustand des Gurtspanners ein hier nicht dargestelltes Gurtstück zwischen Umlenkkante 27 und der im Spannhebel 2 angeordneten Umlenkkante 15 im Wesentlichen senkrecht zu seinem Verlauf auslenkt und somit die Fixierung des Gurtes erhöht.

Eine weitere Sicke 32 ist in dem im Bodenstück 3 zwischen den Aussparungen 4 und 5 angeordneten Stegelement 33 vorgesehen. Der im Spannhebel 2 angeordnete Zwischensteg 14 weist zu dessen Verstärkung ebenfalls eine Sicke 34 sowie seitlich jeweils eine Biegekante 40 bzw. 41 auf, von denen eine als Umlenkkante 15 dient. Durch die mit den Biegekanten 40 und 41 gegebene Doppelbördelung ist das Material jeweils rohrähnlich ausgerichtet und reicht fast bis an die Sicke 34 heran. Die Sicke 34 kann neben seiner Verstärkungseigenschaft auch als zusätzliche Gurtfixierung dienen, wie weiter unten dargestellt wird.

In den Seitenwangen 7 und 8 des Grundelements 1 sind Abstützstücke 29 eingearbeitet, die in das Innere des Gurtspanners hineinragen und eine Begrenzung für die Schwenkbewegung beim Öffnen des Spannhebels 2 darstellen.

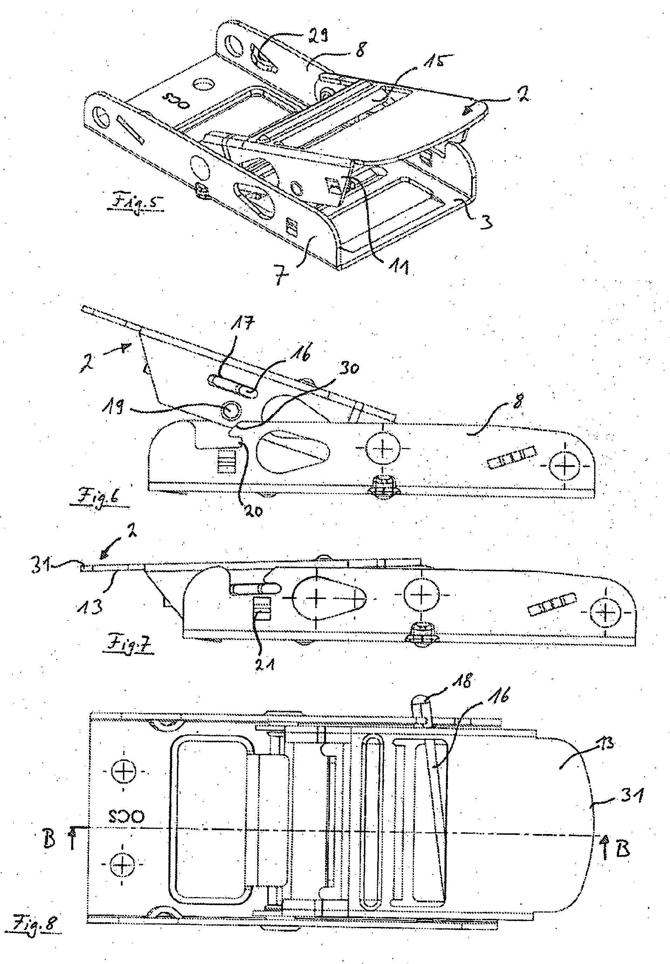

Fig. 5 zeigt in räumlicher Ansicht den Gurtspanner im halbgeschlossenen Zustand. Wegen der Funktion der einzelnen Bestandteile, die in Fig. 5 mit denselben Bezugszeichen wie in den Figuren 1 bis 4 bezeichnet sind, wird auf die vorherigen Zeichnungen verwiesen. Fig. 6 zeigt den Gurtspanner gemäß Fig. 5 in Seitenansicht, wobei die dargestellte Seitenansicht in Fig. 5 vom Betrachter abgewandt ist. Der Spannhebel 2 befindet sich in einer Position vor dem Einrasten des Federstiftes 16 in die Einrastnut 20. Die Seitenwange 8 des Grundelements 1 weist oberhalb der Einrastnut 20 eine Gleitschräge 30 auf, durch die der Federstift 16 bei weiterem Schließen des Spannhebels 2 in Richtung der Längsausdehnung des Langlochs 17 ausgelenkt wird. In der Spann-Endstellung des Spannhebels 2 rastet der Federstift 16 dann aufgrund seiner elastischen Vorspannung automatisch in die Einrastnut 20 ein und fixiert damit den Spannhebel in der Spann-Endstellung.

Die Spann-Endstellung ist in Fig. 7 in Seitenansicht dargestellt. Die Spann-Endstellung ist ebenfalls in den Figuren 8 bis 11 in Aufsicht, im seitlichen Schnitt mit und ohne Gurt und in räumlicher Darstellung abgebildet. Um den Gurtspanner aus der Spann-Endstellung zu lösen, muss der Federstift 16 aus seiner Einraststellung in der Einrastnut 20 herausbewegt werden. Dies kann durch einen Griff einer den Gurtspanner bedienenden Person an das Ende 18 des Federstifts 16 erfolgen. Es ist allerdings auch möglich, den Federstift 16 mittels des in Fig. 7 nicht dargestellten Gurtes zu lösen, wie weiter unten ausgeführt wird. Durch das Entriegeln des Federstiftes 16 springt der Spannhebel 2 noch nicht automatisch auf sondern ist zusätzlich aufgrund der Einrastköpfe 19 (siehe Fig. 6), die in die Einraststücke 21 eingreifen, gesichert, so dass noch ein leichter Zug mittels der Bedienplatte 13 des Spannhebels 2 notwendig sein kann.

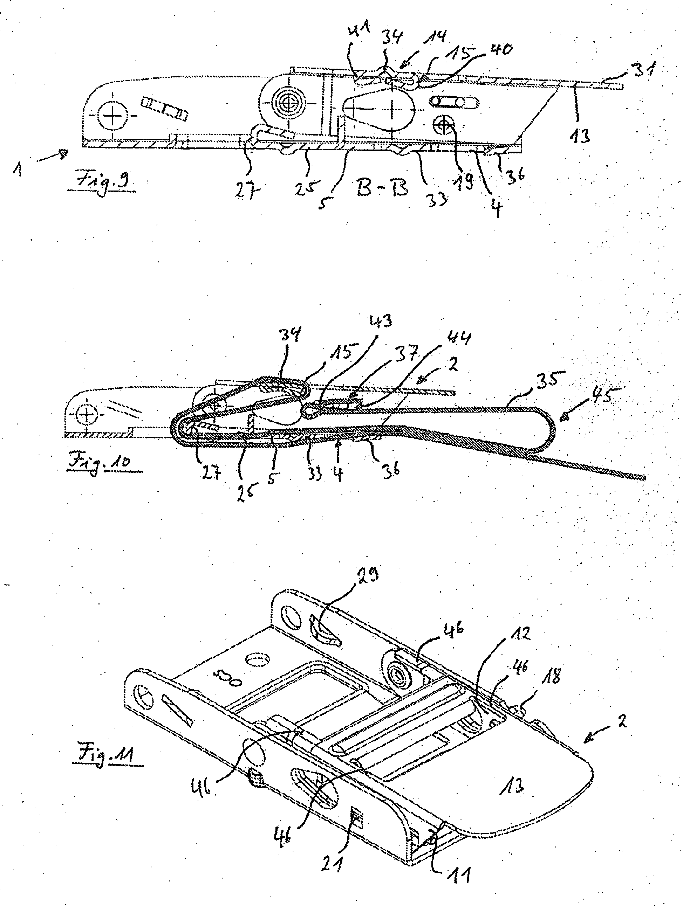

Fig. 9 zeigt den Gurtspanner im seitlichen Querschnitt im geschlossenen Zustand ohne und Fig. 10 mit Gurt 35. Ein vorderes Bodenstückteil 36 ist zur Aussparung 4 hin leicht geneigt ausgeführt, da der Gurt 35 über dieses vordere Bodenstückteil 36 in die Aussparung 4 hineingeführt ist. Der Gurt 35 unterquert das Stegelement 33 und verläuft um die Umlenkkante 27 am Grundelement 1 herum zur Umlenkkante 15 am Spannhebel 2. Dabei ist der Gurt 35 um das Stegelement 14 herumgeführt, wo es die Sicke 34 überquert. Diese Sicke 34 greift dabei in den gespannten Gurt 35 hinein und erhöht auf diese Weise die Gurtfixierung. Der Gurt läuft anschließend wieder um die Umlenkkante 27 des Bodenstückteils 25 sowie durch die Aussparung 5 in das Innere des Gurtspanners hinein. Der Gurt 35 ist an seinem Ende doppelt gelegt und mit einer Naht 43 versehen, die ein freies Endstück 37 erzeugt. Das freie Endstück 37 ist relativ steif und bildet mit dem anliegenden Stück des Gurtes 35 eine Art Tasche 44, die ein Teilstück des Federstifts 16 aufnehmen kann. Die Steifigkeit des Gurtmaterials erlaubt es, durch Ziehen an einer durch den Gurt 35 gebildeten Schlaufe 45 den Federstift 16 aus der eingerasteten Stellung herauszuziehen und damit den Spannhebel 2 auf einfache Weise zu lösen.

In Figur 11 ist eine der beiden Abstützstücke 29, die die Schwenkbewegung des Spannhebels 2 in den geöffneten Zustand begrenzen, deutlich zu sehen. Des weiteren sind am Spannhebel 2 Winkelstücke 46 dargestellt, die einstückig mit den Seitenwangen 11 bzw. 12, der Bedienplatte 13 und dem Zwischensteg 14 verbunden sind, wodurch die Stabilität des Spannhebels 2 und damit des gesamten Gurtspanners erhöht wird.

### Bezugszeichenliste

- 1: Grundelement
- 2: Spannhebel
- 3: Bodenstück
- 4 bis 6: Aussparungen im Bodenstück
- 7, 8: Seitenwangen des Grundelements
- 9, 10: Schwenkverbindungen
- 11, 12: Seitenwangen des Spannhebels
- 13: Bedienplatte
- 14: Zwischensteg
- 15: Umlenkkante
- 16: Federstift
- 17: Langloch
- 18: Ende des Federstifts
- 19: Einrastkopf
- 20: Einrastnut
- 21: Einraststücke
- 22: Federschleife
- 23: Aufnahme
- 24: Verstärkungskante
- 25: mittleres Bodenstückteil
- 26: Sicke
- 27: Umlenkkante am Grundelement
- 28: Abkantung
- 29: Abstützstück
- 30: Gleitschräge
- 31: vorderes Ende des Spannhebels
- 32: Sicke
- 33: Stegelement
- 34: Sicke
- 35: Gurt
- 36: Vorderes Bodenstückteil
- 37: freies Endstück des Gurtes
- 38: Aussparung
- 39: Aussparung
- 40: Biegekante
- 41: Biegekante
- 42: Abkantung
- 43: Naht
- 44: Tasche
- 45: Schlaufe
- 46: Winkelstücke

## Patentansprüche

1. Gurtspanner, umfassend
ein Grundelement (1) mit Seitenwangen (7, 8) und einen am Grundelement (1) schwenkbar angeordneten Spannhebel (2), wobei
- der Spannhebel (2) in einer Spann-Endstellung mittels eines gegen eine Federkraft vorgespannten und beim Schließen des Spannhebels (2) selbstständig in eine Einrastnut (20) einrastenden Schnappelements (16) am Grundelement (1) fixiert ist,
- das Schnappelement (16) am Spannhebel (2) angeordnet ist und
- die Einrastnut (20) an lediglich einer der Seitenwangen (7, 8) des Grundelements (1) vorgesehen ist,
**dadurch gekennzeichnet, dass**
das Schnappelement (16) eine Federstange ist, welche an einer ersten Seitenwange (11, 12) des Spannhebels (2) fixiert ist und durch eine zweite Seitenwange (11, 12) des Spannhebels (2) hindurch geführt ist.

2. Gurtspanner nach Anspruch 1, **gekennzeichnet durch** beim Schließen des Spannhebels (2) wirkende Auslenkmittel zum Auslenken des Schnappelements (16) gegen eine Federkraftvorspannung.

3. Gurtspanner nach Anspruch 2, **dadurch gekennzeichnet, dass** die Auslenkmittel eine Gleitschräge (30) umfasst, die an der die Einrastnut (20) aufweisenden Seitenwange (7, 8) des Grundelements (1) angeordnet ist.

4. Gurtspanner nach einem der Ansprüche 1 bis 3, **dadurch gekennzeichnet, dass** das Schnappelement (16) durch ein in der zweiten Seitenwange (11, 12) des Spannhebels (2) vorgesehenes Langloch (17) geführt ist.

5. Gurtspanner nach einem der vorherigen Ansprüche, **dadurch gekennzeichnet, dass** sowohl am Grundelement (1) als auch am Spannhebel (2) jeweils eine Umlenkkante (15, 27) zum Umlenken des Gurtes in der Spann-Endstellung vorgesehen sind.

6. Gurtspanner nach Anspruch 5, **dadurch gekennzeichnet, dass** am Grundelement (1) ein Spannsteg (28) fixiert ist, der in der Spann-Endstellung des Spannhebels (2) zwischen den beiden Umlenkkanten (15, 27) angeordnet ist und in der Spann-Endstellung ein zwischen den Umlenkkanten (15, 27) eingespanntes Gurtstück quer zu seiner Längsrichtung auslenkt.

7. Gurtspanner nach Anspruch 5 oder 6, **dadurch gekennzeichnet, dass** die am Spannhebel (2) vorgesehene Umlenkkante (15) an einem zwischen zwei Aussparungen (38, 39) fixierten Zwischensteg (14) durch eine Biegekante (40) realisiert ist.

8. Gurtspanner nach Anspruch 7, **dadurch gekennzeichnet, dass** der Zwischensteg (14) beidseitig durch Biegekanten (40, 41) begrenzt ist.

9. Gurtspanner nach Anspruch 7 oder 8, **dadurch gekennzeichnet, dass** der Zwischensteg (14) eine Sicke (34) aufweist.

10. Gurtspanner nach einem der vorherigen Ansprüche, **dadurch gekennzeichnet, dass** die Aussparungen im Spannhebel (2) zu den Seitenwangen (11, 12) des Spannhebels (2) hin durch einstückig mit diesen Seitenwangen (11,12) verbundene und zu diesen Seitenwangen (11, 12) abgewinkelte Winkelstücke (46) begrenzt sind.

11. Gurtspanner nach einem der vorherigen Ansprüche, **dadurch gekennzeichnet, dass** in einem Bodenstück (3) des Grundelements (1) eine mit einer in das Grundelement (1) hinein ragenden Aufkantung (24) versehene Aussparung (6) vorgesehen ist.

12. Gurtspanner nach Anspruch 11, **dadurch gekennzeichnet, dass** die am Grundelement (1) angeordnete Umlenkkante (27) durch einen Abschnitt der Aufkantung (24) der Aussparung (6) sowie eine sich an dem Abschnitt der Aufkantung (24) anschließende Abkantung (42) gebildet ist.

## Claims

1. Belt tensioner, comprising
a main element (1) with side cheeks (7, 8) and a tensioning lever (2) which is arranged pivotably on the main element (1),
- the tensioning element (2) being fixed in a tensioning end position by means of a snap-action element (16) on the main element (1), which snap-action element (16) is prestressed counter to a spring force and, upon closure of the tensioning lever (2), latches automatically into a latching groove (20),
- the snap-action element (16) being arranged on the tensioning lever (2), and
- the latching groove (20) being provided on merely one of the side cheeks (7, 8) of the main element (1), **characterized in that**
the snap-action element (16) is a spring rod which is fixed on a first side cheek (11, 12) of the tensioning lever (2) and is guided through a second side cheek (11, 12) of the tensioning lever (2).

2. Belt tensioner according to Claim 1, **characterized by** deflection means which act upon closure of the tensioning lever (2) in order to deflect the snap-action element (16) counter to a spring force prestress.

3. Belt tensioner according to Claim 2, **characterized in that** the deflection means comprises a sliding bevel (30) which is arranged on that side cheek (7, 8) of the main element (1) which has the latching groove (20).

4. Belt tensioner according to one of Claims 1 to 3, **characterized in that** the snap-action element (16) is guided through a slot (17) which is provided in the second side cheek (11, 12) of the tensioning lever (2).

5. Belt tensioner according to one of the preceding claims, **characterized in that** in each case one deflection edge (15, 27) for deflecting the belt in the tensioning end position is provided both on the main element (1) and on the tensioning lever (2).

6. Belt tensioner according to Claim 5, **characterized in that** a clamping web (28) is fixed on the main element (1), which clamping web (28) is arranged between the two deflection edges (15, 27) in the tensioning end position of the tensioning lever (2) and, in the tensioning end position, deflects a belt piece which is clamped in between the deflection edges (15, 27) transversely with respect to its longitudinal direction.

7. Belt tensioner according to Claim 5 or 6, **characterized in that** the deflection edge (15) which is provided on the tensioning lever (2) is realized by way of a bending edge (40) on an intermediate web (14) which is fixed between two cut-outs (38, 39).

8. Belt tensioner according to Claim 7, **characterized in that** the intermediate web (14) is delimited on both sides by bending edges (40, 41).

9. Belt tensioner according to Claim 7 or 8, **characterized in that** the intermediate web (14) has a bead (34).

10. Belt tensioner according to one of the preceding claims, **characterized in that** the cut-outs in the tensioning lever (2) are delimited towards the side cheeks (11, 12) of the tensioning lever (2) by angled parts (46) which are connected integrally to the said side cheeks (11, 12) and are angled away with respect to the said side cheeks (11, 12).

11. Belt tensioner according to one of the preceding claims, **characterized in that** a cut-out (6) which is provided with an upward edge (24) which protrudes into the main element (1) is provided in a bottom piece (3) of the main element (1).

12. Belt tensioner according to Claim 11, **characterized in that** the deflection edge (27) which is arranged on the main element (1) is formed by a section of the upward edge (24) of the cut-out (6) and by a downward edge (42) which adjoins the section of the upward edge (24).

## Revendications

1. Tendeur de ceinture, comprenant :
un élément de base (1) doté de joues latérales (7, 8) et d'un levier de serrage (2) disposé à pivotement sur l'élément de base (1),
le levier de serrage (2) étant immobilisé sur l'élément de base (1) dans une position de fin de course de serrage au moyen d'un élément de pinçage (16) précontraint en opposition à une force élastique et s'encliquetant de manière autonome dans une rainure d'encliquetage (20) lors de la fermeture du levier de serrage (2),
l'élément de pinçage (16) étant disposé sur le levier de serrage (2) et
la rainure d'encliquetage (20) étant prévue sur une seule des joues latérales (7, 8) de l'élément de base (1),
**caractérisé en ce que**
l'élément de pinçage (16) est une tringle élastique fixée sur une première joue latérale (11, 12) du levier de serrage (2) et traversant une deuxième joue de serrage (11, 12) du levier de serrage (2).

2. Tendeur de ceinture selon la revendication 1, **caractérisé par** des moyens de déviation agissant lors de la fermeture du levier de serrage (2) et déviant l'élément de pinçage (16) en opposition à une précontrainte élastique.

3. Tendeur de ceinture selon la revendication 2, **caractérisé en ce que** les moyens de déviation comportent une pente de coulissement (30) disposée sur la joue latérale (7, 8) de l'élément de base (1) qui présente la rainure d'encliquetage (20).

4. Tendeur de ceinture selon l'une des revendications 1 à 3, **caractérisé en ce que** l'élément de pinçage (16) traverse un trou oblong (17) prévu dans la deuxième joue latérale (11, 12) du levier de serrage (2).

5. Tendeur de ceinture selon l'une des revendications précédentes, **caractérisé en ce que** tant sur l'élément de base (1) que sur le levier de serrage (2), une arête de renvoi (15, 27) qui renvoie la ceinture dans la position de fin de course de serrage sont prévus.

6. Tendeur de ceinture selon la revendication 5, **caractérisé en ce qu'**une nervure de serrage (28) est fixée sur l'élément de base (1), est disposée entre les deux arêtes de renvoi (15, 27) lorsque le levier de serrage (2) se trouve en position de fin de course de serrage et dévie transversalement au sens de sa longueur un segment de ceinture serré entre les arêtes de renvoi (15, 27) en position de fin de course de serrage.

7. Tendeur de ceinture selon les revendications 5 ou 6, **caractérisé en ce que** l'arête de renvoi (15) prévue sur le levier de serrage (2) est réalisée par une arête de flexion (40) prévue sur une nervure intermédiaire (14) fixée entre deux découpes (38, 39).

8. Tendeur de ceinture selon la revendication 7, **caractérisé en ce que** la nervure intermédiaire (14) est délimitée des deux côtés par des arêtes de flexion (40, 41).

9. Tendeur de ceinture selon les revendications 7 ou 8, **caractérisé en ce que** la nervure intermédiaire (14) présente une moulure (34).

10. Tendeur de ceinture selon l'une des revendications précédentes, **caractérisé en ce que** les découpes ménagées dans le levier de serrage (2) sont délimitées du côté des joues latérales (11, 12) du levier de serrage (2) par des pièces coudées (46) reliées d'un seul tenant à ces joues latérales (11, 12) et coudées par rapport à ces joues latérales (11, 12).

11. Tendeur de ceinture selon l'une des revendications précédentes, **caractérisé en ce qu'**une découpe (6) dotée d'une arête (24) qui pénètre dans l'élément de base (1) est prévue dans une pièce de fond (3) de l'élément de base (1).

12. Tendeur de ceinture selon la revendication 11, **caractérisé en ce que** l'arête de renvoi (27) disposée sur l'élément de base (1) est formée par une partie de l'arête (24) de la découpe (6) ainsi que par une arête (42) qui se raccorde à la partie de l'arête (24).
